(19) Europäisches Patentamt
European Patent Office
Office européen des brevets

(11) Veröffentlichungsnummer : **0 098 799**
**B1**

(12) # EUROPÄISCHE PATENTSCHRIFT

(45) Veröffentlichungstag der Patentschrift : **10.09.86**

(51) Int. Cl.⁴ : **C 09 B 55/00**

(21) Anmeldenummer : **83810286.1**

(22) Anmeldetag : **27.06.83**

(54) **1:2-Metallkomplexe von Azomethinfarbstoffen mit Arylazogruppen.**

(30) Priorität : **02.07.82 CH 4053/82**

(43) Veröffentlichungstag der Anmeldung : **18.01.84 Patentblatt 84/03**

(45) Bekanntmachung des Hinweises auf die Patenterteilung : **10.09.86 Patentblatt 86/37**

(84) Benannte Vertragsstaaten : **CH DE FR GB IT LI**

(56) Entgegenhaltungen :
**FR-A- 2 137 828**
**FR-A- 2 270 302**
**FR-A- 2 297 898**
**FR-A- 2 311 063**

(73) Patentinhaber : **CIBA-GEIGY AG**
**Klybeckstrasse 141**
**CH-4002 Basel (CH)**

(72) Erfinder : **Püntener, Alois, Dr.**
**Pulverweg 13**
**CH-4310 Rheinfelden (CH)**
Erfinder : **Beffa, Fabio, Dr.**
**Burgstrasse 38**
**CH-4125 Riehen (CH)**

**EP 0 098 799 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Aus der FR-A 2 137 828 sind symmetrische 1 : 2-Chrom- bzw. 1 : 2-Kobalt-Komplexe von Azomethinfarbstoffen mit insgesamt 2 Sulfogruppen bekannt.

Die FR-A 2 297 898 offenbart unsymmetrische 1 : 2-Chrom-Komplexe von Azomethinfarbstoffen, in denen gegebenenfalls einer der beiden Farbstoffe durch eine Phenylazo-Gruppe substituiert ist und der gesamte Komplex höchstens 3 Sulfogruppen aufweist.

Gegenstand der vorliegenden Erfindung sind Metallkomplexfarbstoffe der Formel I

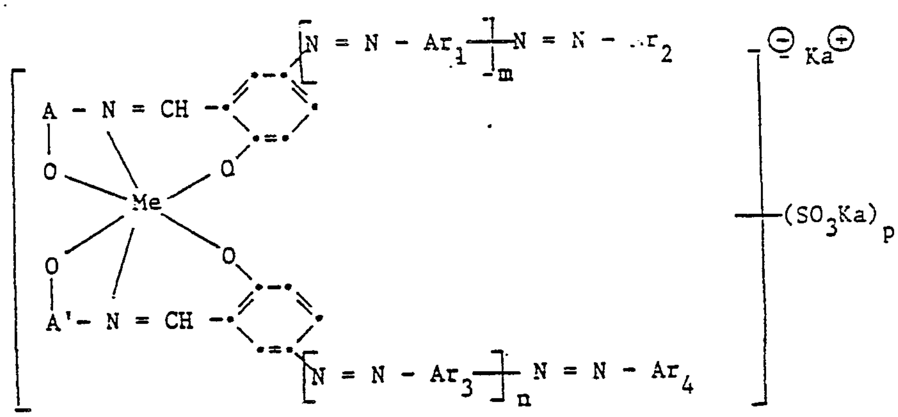

(I)

worin

Me Kobalt oder Chrom,

A und A' unabhängig voneinander je den Rest eines Amins der Benzolreihe, welche die Hydroxygruppe in o-Stellung zur Azomethingruppe trägt,

$Ar_1$ und $Ar_3$ unabhängig voneinander je einen gegebenenfalls substituierten Phenylen- oder Naphthylenrest,

$Ar_2$ und $Ar_4$ unabhängig voneinander je einen gegebenenfalls substituierten Benzol- oder Naphthalinrest,

m und n unabhängig voneinander jeweils 0 oder 1,

p eine ganze Zahl von 4 bis 6 und

$Ka^{\oplus}$ ein Kation bedeuten.

In den erfindungsgemässen Metallkomplexfarbstoffen der obigen Formel I können die Reste A und A' noch einen oder mehrere weitere Substituenten tragen, z. B. niedermolekulares Alkyl oder Alkoxy, Halogen, wie z. B. Chlor oder Brom, Nitro, Cyano, Sulfo, Alkylsulfonyl, wie z. B. Methylsulfonyl, Sulfamide, wie z. B. Sulfamid oder Sulfamethylamid, oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit « Acylamino » werden niedrigmolekulare Alkanoylamino-, Alkylsulfonylamino- und Alkoxycarbonylaminoreste sowie Sulfonylamino-, Aroylamino- und Arylsulfonylaminoreste bezeichnet.

Die Reste A und A' leiten sich beispielsweise von folgenden Aminen ab : 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-, 4-Methyl- und 4-Acetylmino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Sulfonamido-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 2-Amino-1-hydroxybenzol-4- oder -5-sulfonsäure, 4-Nitro-2-amino-1-hydroxybenzol-6-sulfonsäure, 5-Nitro- oder 6-Nitro-2-amino-1-hydroxybenzol-4-sulfosäure, 4-Chlor-2-amino-1-hydroxybenzol-6-sulfonsäure, 4-Sulfonylamido-2-amino-1-hydroxybenzol sowie 4-Methylsulfonyl-2-amino-1-hydroxybenzol.

$Ar_1$ und $Ar_3$ sind gegebenenfalls substituierte Phenylen- oder Naphthylenreste, wobei als Substituenten hauptsächlich die Sulfogruppe sowie — im Falle des Phenylenrestes — niedrigmolekulare Alkyl- und Alkoxyreste in Frage kommen, wie z. B. Methyl, Ethyl und Methoxy.

$Ar_2$ und $Ar_4$ sind Benzol- oder Naphthalinreste und können die bei Diazokomponenten üblichen Substituenten tragen.

$Ka^{\oplus}$ bedeutet vorzugsweise Lithium, Kalium oder vor allem Natrium. Ausserdem kann $Ka^{\oplus}$ ein Ammoniumkation oder das Ammoniumsalz eines organischen Amins sein.

Bevorzugte erfindungsgemässe Farbstoffe entsprechen der Formel II

(Siehe Figur Seite 3 f.)

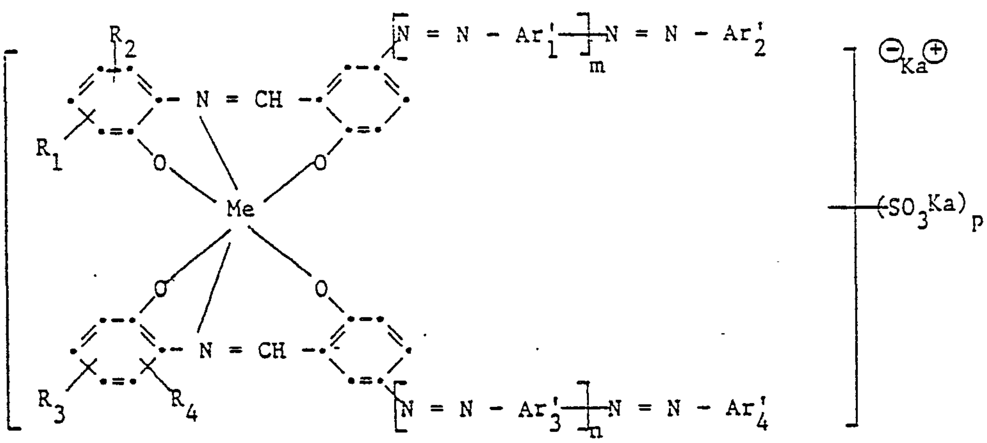

(II)

worin

Me Kobalt oder Chrom,

$R_1$, $R_2$, $R_3$ und $R_4$ unabhängig voneinander je Wasserstoff, Nitro, Chlor, Sulfo, $C_1$-$C_4$-Alkyl, $C_1$-$C_4$-Alkoxy, Sulfamid, N-mono- oder N,N-dialkyliertes Sulfamid, oder Alkylsulfonyl,

$Ar'_1$ und $Ar'_3$ unabhängig voneinander je einen gegebenenfalls durch Sulfo, $C_1$-$C_4$-Alkyl oder $C_1$-$C_4$-Alkoxy substituierten Phenylenrest oder einen gegebenenfalls durch Sulfo substituierten Naphthylenrest,

$Ar'_2$ und $Ar'_4$ unabhängig voneinander je einen gegebenenfalls mit Chlor, Brom, Nitro, Sulfo, Sulfamid, N-mono- oder N,N-dialkyliertem Sulfamid, Alkylsulfonyl, Alkyl, Alkoxy oder Acylamino substituierten Phenyl- oder einen gegebenenfalls mit Sulfo substituierten Naphthylrest,

m und n jeweils 0 oder 1

p eine ganze Zahl von 4 bis 6 und

$Ka^{\oplus}$ ein Kation bedeutet.

Unter diesen sind diejenigen bevorzugt, bei denen n und m jeweils 0 bedeuten, sowie diejenigen, bei denen p 4 oder 6 bedeutet.

Wegen ihrer leichten Zugänglichkeit und ihrer guten färberischen Eigenschaften sind insbesondere die symmetrischen Komplexe der Formel III bevorzugt

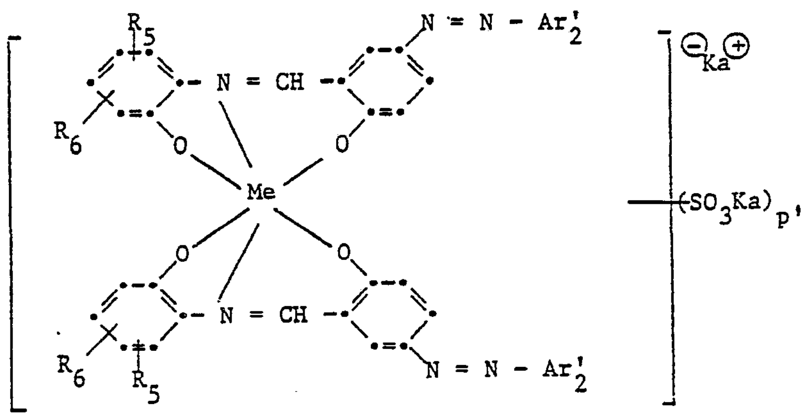

. (III)

worin

Me Kobalt oder Chrom,

$R_5$ und $R_6$ je Wasserstoff, Chlor, Nitro oder Sulfo,

$Ar'_2$ einen gegebenenfalls mit Chlor, Sulfo, Nitro, Alkyl, Alkoxy oder Acylamino substituierten Phenylrest oder einen gegebenenfalls durch Sulfo substituierten Naphthylrest,

p' 4 oder 6 und $Ka^{\oplus}$ ein Kation bedeutet.

Me bedeutet vorzugsweise Kobalt.

Vorzugsweise ist $R_5$ Nitro oder Sulfo, welche in 4- oder 6-Stellung des 1-Hydroxy-2-aminobenzols angeordnet sind.

Die erfindungsgemässen Farbstoffe können nach an sich bekannten Methoden hergestellt werden, beispielsweise indem man einen Farbstoff der Formel IV

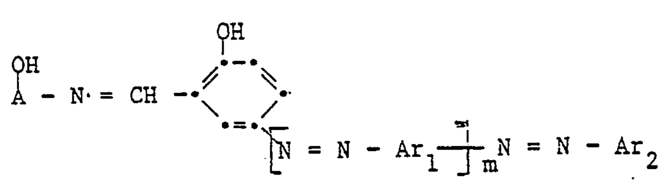

(IV)

und einen Farbstoff der Formel V

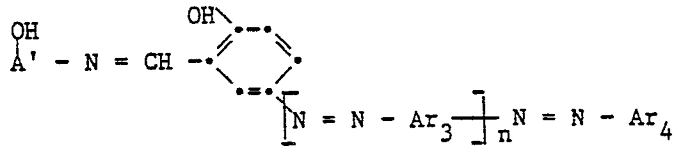

(V)

wobei die Farbstoffe IV und V identisch sein können, mit einem kobalt- oder chromabgebenden Mittel zum 1 : 2-Metallkomplex umsetzt.

Die Farbstoffe der Formel IV bzw. V sind bekannt und nach üblichen Methoden herstellbar. Anstelle der Farbstoffe der Formel IV bzw. V setzt man vorteilhaft die Einzelkomponenten, d. h. Amine der Formel

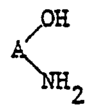 bzw. 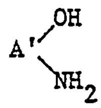

und die entsprechenden substituierten o-Hydroxybenzaldehyde ein.

Falls bei dem obigen Verfahren die Farbstoffe IV und V verschieden sind, so bilden sich Gemische von 1 : 2-Metallkomplexen, die neben symmetrischen Komplexen, enthaltend 2 Moleküle Farbstoff der Formel IV bzw. V, auch asymmetrische Komplexe, enthaltend je ein Molekül des Farbstoffes der Formel IV und V, aufweisen.

Die 1 : 2-Chromkomplexe kann man auch herstellen, indem man den 1 : 1-Chromkomplex eines Farbstoffes der Formel IV oder eines Farbstoffes der Formel V herstellt und diesen dann mit einem nicht metallisierten Farbstoff der Formel V bzw. IV zum 1 : 2-Chromkomplex umsetzt. Auf diese Weise sind auch einheitlich asymmetrische 1 : 2-Chromkomplexe zugänglich.

Die Kobaltierung und die Chromierung werden nach den üblichen Methoden durchgeführt.

Die nach den obigen Verfahren erhältlichen neuen Metallkomplexfarbstoffe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedensten natürlichen oder synthetischen Stickstoff- und Hydroxygruppen enthaltenden Materialien wie Polyamiden oder Polyurethanen, insbesondere aber zum Färben von Wolle oder vor allem Leder.

Die neuen Farbstoffe sind farbstark, färben gut ein und decken gut. Sie weisen ein gutes Ziehvermögen und gutes Aufbauvermögen auf und ergeben Färbungen mit guten Echtheiten, wie Wasch-, Wasser-, Schweiss-, Reib-, Diffusions- und Lichtechtheit. Besondere Erwähnung verdienen die gute Säure- und Alkalistabilität sowie die Säure- und Alkaliechtheit. Man erhält auf Leder kräftige gelbbraune bis braune Nuancen.

In den nachfolgenden Beispielen bedeuten die Teile, sofern nichts anderes angegeben wird, Gewichtsteile und die Prozente Gewichtsprozente. Die Temperaturen sind in Grad Celcius angegeben.

## Beispiel 1

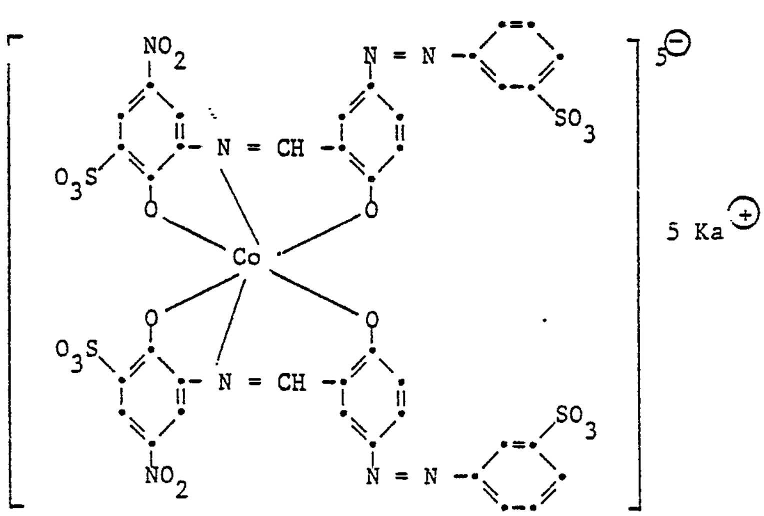

23,4 Teile 2-Amino-4-nitro-1-hydroxybenzol-6-sulfonsäure und 30,6 Teile 5-(3'-Sulfophenylazo)-2-hydroxybenzaldehyd werden in 600 Teile Wasser eingetragen und auf 80° erwärmt. Bei dieser Temperatur tropft man 55 Volumenteile einer 1 molaren Kobaltsulfatlösung zu und hält mit 2 molarer Natronlauge einen konstanten pH von 8. Nach ca. 5 Stunden ist die Metallisierung praktisch vollständig durchgeführt. Man salzt mit 70 Teilen Natriumchlorid und 105 Teilen Kaliumchlorid aus, filtriert nach dem Erkalten ab und trocknet den Farbstoff, dessen komplexes Anion der obigen Formel entspricht. $Ka^{\oplus}$ bedeutet Natrium oder Kalium oder eine Mischung aus beiden. Der Farbstoff färbt Leder in einem gelbbraunen Farbton mit guten Echtheiten.

Beispiel 2

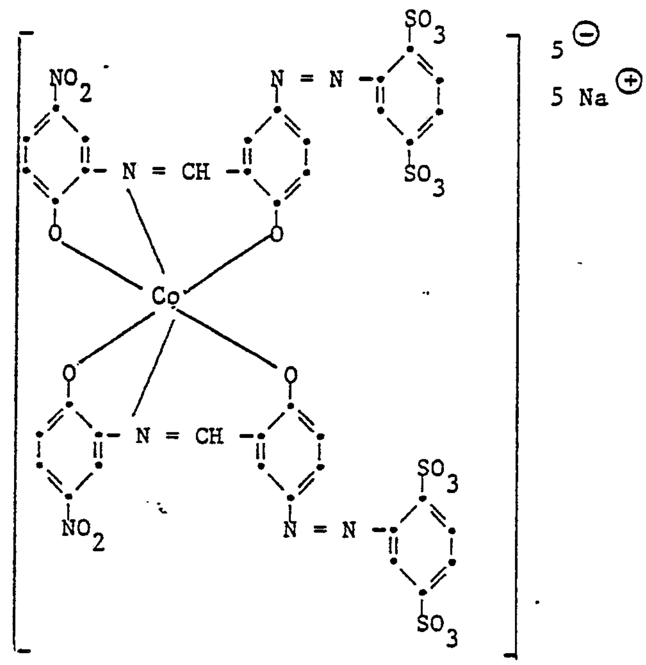

15,4 Teile 4-Nitro-2-amino-1-hydroxybenzol werden zusammen mit 38,6 Teilen 5-(2',5'-Disulfophenylazo)-2-hydroxybenzaldehyd in 500 Teile Wasser eingetragen und auf 80° erwärmt. Unter gutem Rühren tropft man 200 Volumenteile einer Lösung aus 15,5 Teilen Kobaltsulfatheptahydrat und 16,5 Teilen Weinsäure zu, die mit 3,4 Teilen Wasserstoffperoxid 35 %ig behandelt und mit 5n-Natronlauge auf pH 8 gestellt worden ist. Nach mehrstündigem Rühren bei 80-85° und konstantem pH von 8, erhalten durch Zugabe von 5n-Natronlauge, ist die Komplexbildung beendet. Der gebildete Kobaltkomplexfarbstoff wird durch Zugabe von Natriumchlorid ausgesalzen, filtriert und mit gesättigter Natriumchloridlösung gewaschen. Nach dem Trocknen stellt er ein braunes Pulver dar, das sich in Wasser löst und Leder in gelbbraunen Tönen von guten Echtheiten färbt.

Die nachfolgende Tabelle enthält weitere Farbstoffe, die nach dem vorstehend beschriebenen Verfahren zugänglich sind. In Spalte 2 sind die verwendeten Amine, in Spalte 3 die verwendeten Aldehyde und in Spalte 4 das zur Komplexbildung eingesetzte Metall angegeben. Spalte 5 zeigt die mit den neuen Farbstoffen auf Leder erzielbaren Nuancen.

(Siehe Tabelle Seite 6 ff.)

Tabelle

| No. | Amin | Aldehyd | Metall | Farbton auf Leder |
|---|---|---|---|---|
| 1. | 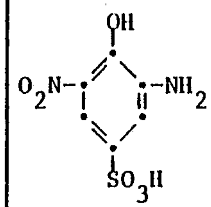 | 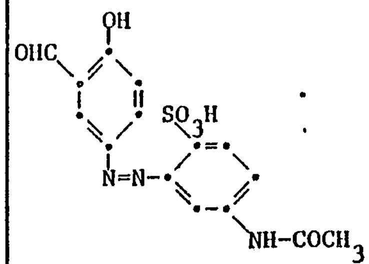 | Co | gelbbraun |
| 2. | 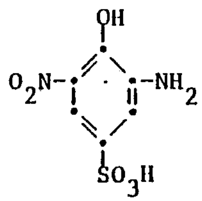 | 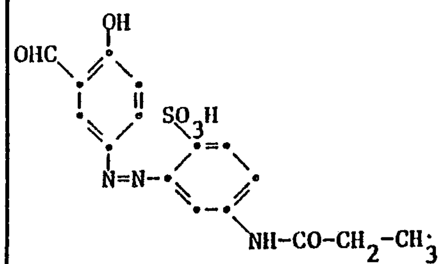 | Co | gelbbraun |
| 3. | 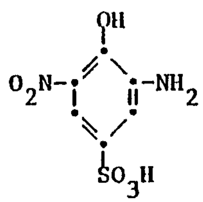 | 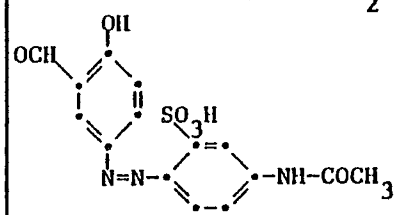 | Co | gelbbraun |
| 4. | 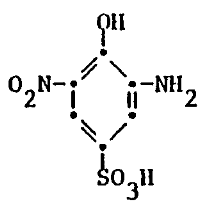 | 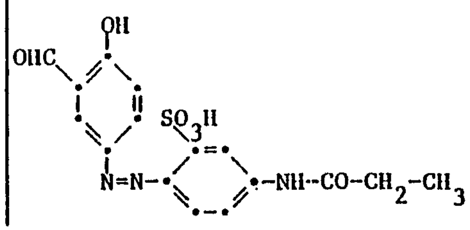 | Co | gelbbraun |

Tabelle (Fortsetzung)

| No. | Amin | Aldehyd | Metall | Farbton auf Leder |
|---|---|---|---|---|
| 5. | 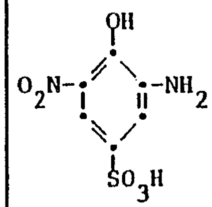 | 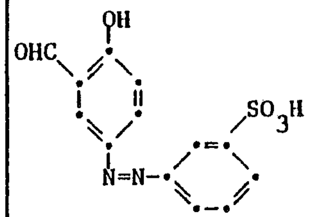 | Co | gelbbraun |
| 6. | 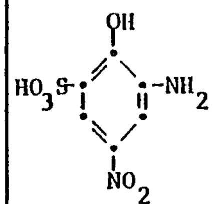 | 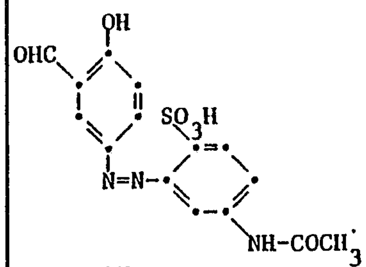 | Co | gelbbraun |
| 7. | 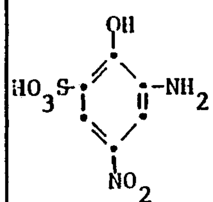 | 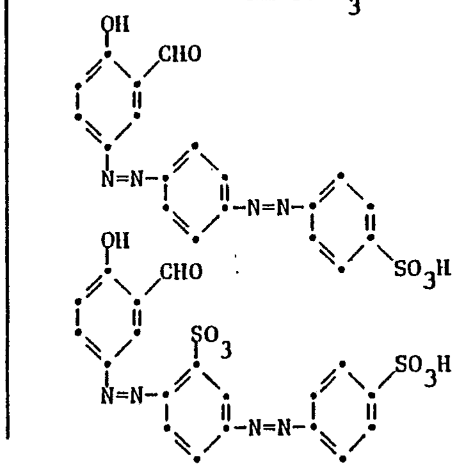 | Co | orangebraun |
| 8. | 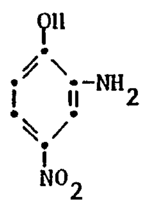 |  | Co | orangebraun |

Tabelle (Fortsetzung)

| No. | Amin | Aldehyd | Metall | Farbton auf Leder |
|---|---|---|---|---|
| 9. | 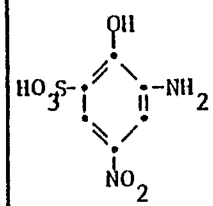 | 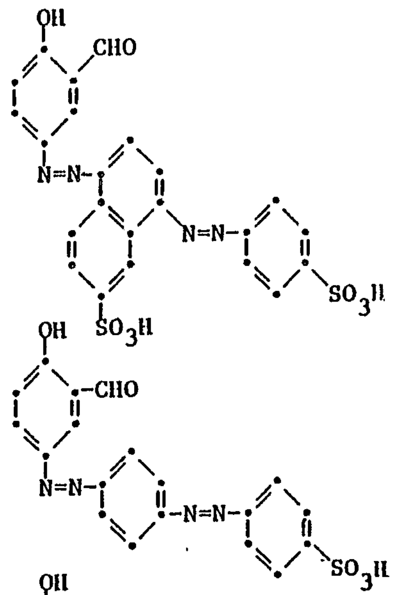 | Co | orangebraun |
| 10. | 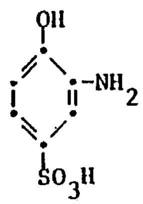 | | Co | orangebraun |
| 11. | 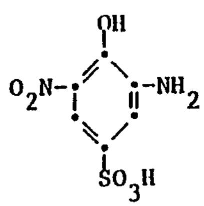 | 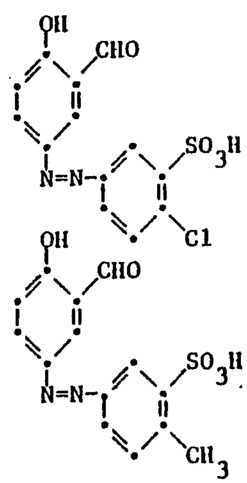 | Co | gelbbraun |
| 12. | 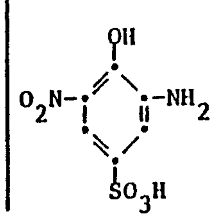 | | Co | gelbbraun |

Tabelle (Fortsetzung)

| No. | Amin | Aldehyd | Metall | Farbton auf Leder |
|---|---|---|---|---|
| 13. | 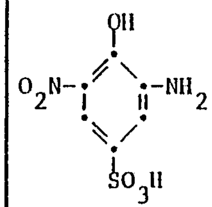 | 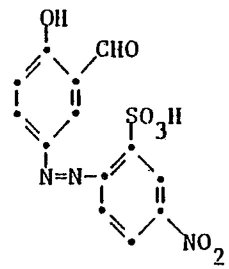 | Cr | gelbbraun |
| 14. | 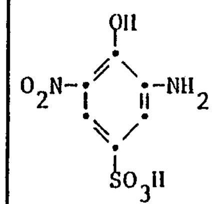 | 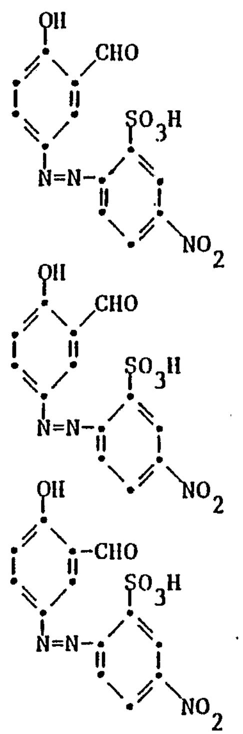 | Co | rotstichig gelbbraun |
| 15. | 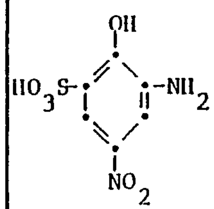 | | Co | rotstichig gelbbraun |
| 16. | 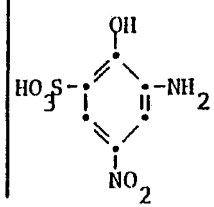 | | Cr | gelbbraun |

Tabelle (Fortsetzung)

| No. | Amin | Aldehyd | Metall | Farbton auf Leder |
|---|---|---|---|---|
| 17. | 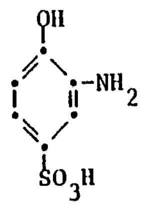 | 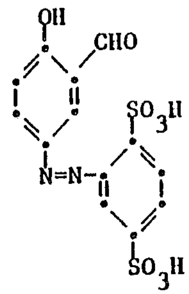 | Co | gelbbraun |
| 18. | 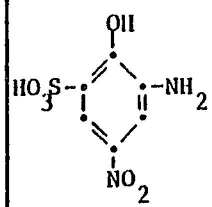 | 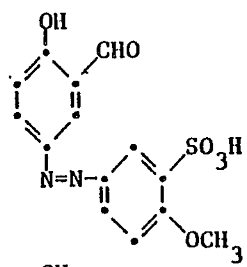 | Co | gelbbraun |
| 19. | 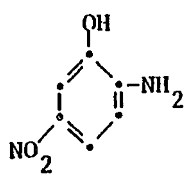 | 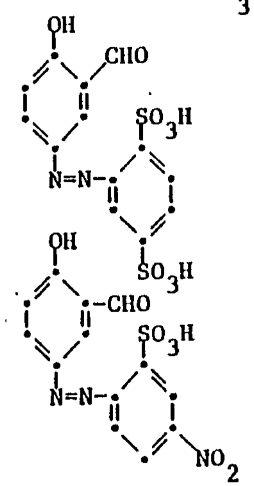 | Co | rotstichig gelbbraun |
| 20. | 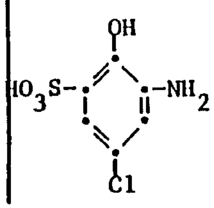 | | Co | rotstichig gelbbraun |

Tabelle (Fortsetzung)

| No. | Amin | Aldehyd | Metall | Farbton auf Leder |
|---|---|---|---|---|
| 21. | 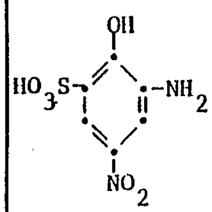 | 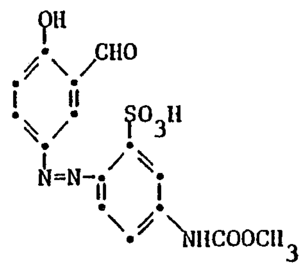 | Co | gelbbraun |
| 22. | 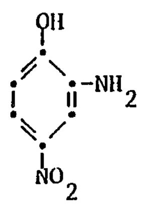 | 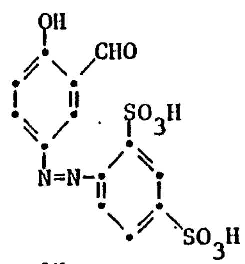 | Co | gelbbraun |
| 23. | 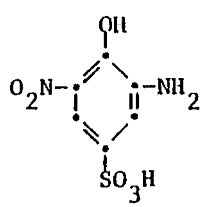 | 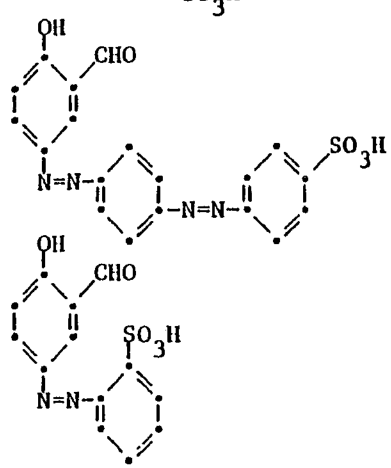 | Co | orangebraun |
| 24. | 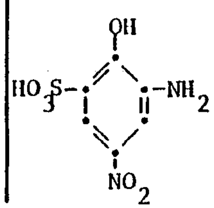 | | Co | gelbbraun |

Tabelle (Fortsetzung

| No. | Amin | Aldehyd | Metall | Farbton auf Leder |
|---|---|---|---|---|
| 25. | 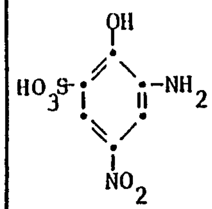 | 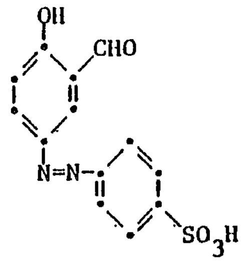 | Co | gelbbraun |
| 26. | 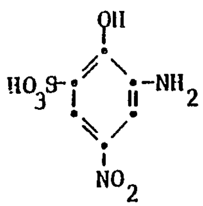 | 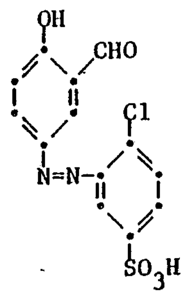 | Co | gelbbraun |
| 27 | 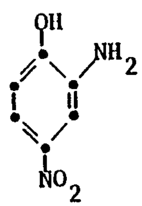 | 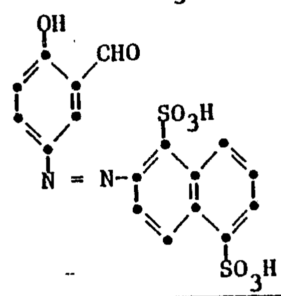 | Co | gelbbraun |

Tabelle (Fortsetzung)

| Nr. | Amin | Aldehyd. | Metall | Farbton auf Leder |
|---|---|---|---|---|
| 28 | 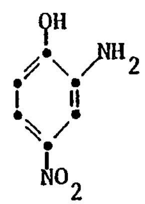 | 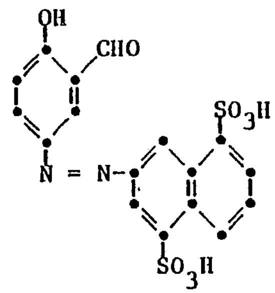 | Co | gelbbraun |
| 29 | 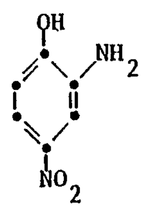 | 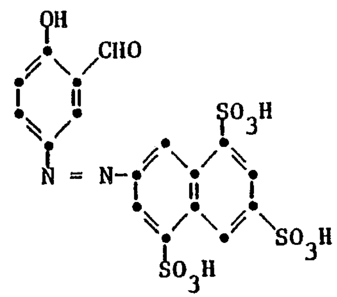 | Co | gelbbraun |
| 30 | 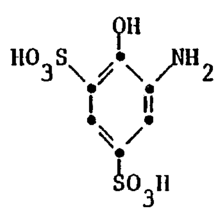 | 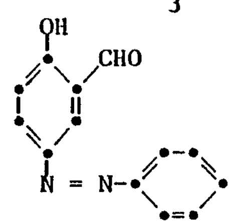 | Co | gelbbraun |

Färbevorschrift für Leder

100 Teile Bekleidungsvelourleder werden bei 50° in einer Lösung von 1 000 Teilen Wasser und 2 Teilen 24 %igem Ammoniak während 2 Stunden aufgewalkt und anschliessend bei 60° in einer Lösung von 1 000 Teilen Wasser, 2 Teilen 24 %igem Ammoniak und 3 Teilen Farbstoff des Beispiels 1 während 1 Stunde gefärbt. Hierauf gibt man eine Lösung von 40 Teilen Wasser und 4 Teilen 85 %iger Ameisensäure zu und färbt noch weitere 30 Minuten. Dann werden die Leder gut gespült und gegebenenfalls noch mit 2 Teilen eines Dicyandiaminoformaldehydkondensationsproduktes während 30 Minuten bei 50° behandelt. Man erhält eine gelbbraune Färbung mit guten Echtheiten.

**Patentansprüche**

1. Metallkomplexfarbstoffe der Formel I

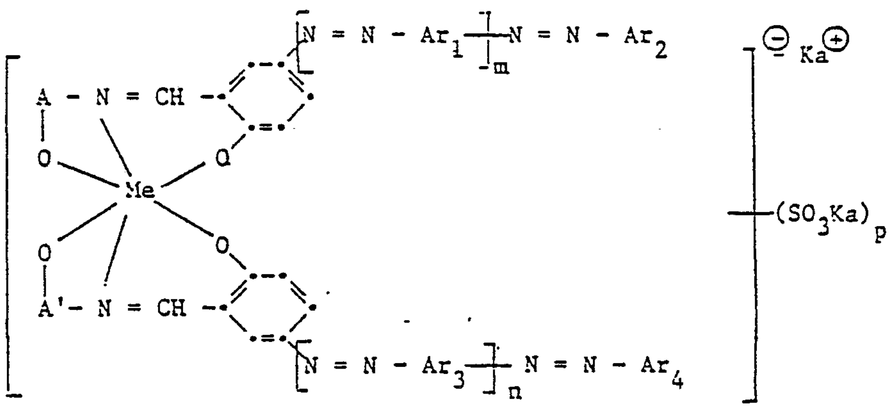

(I)

worin

Me Kobalt oder Chrom,

A und A′ unabhängig voneinander je den Rest eines Amins der Benzolreihe, welche die Hydroxygruppe in o-Stellung zur Azomethingruppe trägt,

$Ar_1$ und $Ar_3$ unabhängig voneinander je einen gegebenenfalls substituierten Phenylen- oder Naphthylenrest,

$Ar_2$ und $Ar_4$ unabhängig voneinander je einen gegebenenfalls substituierten Benzol- oder Naphthalinrest,

m und n unabhängig voneinander jeweils 0 oder 1,

p eine ganze Zahl von 4 bis 6 und

$Ka^{\oplus}$ ein Kation bedeuten.

2. Metallkomplexfarbstoffe gemäss Anspruch 1 der Formel

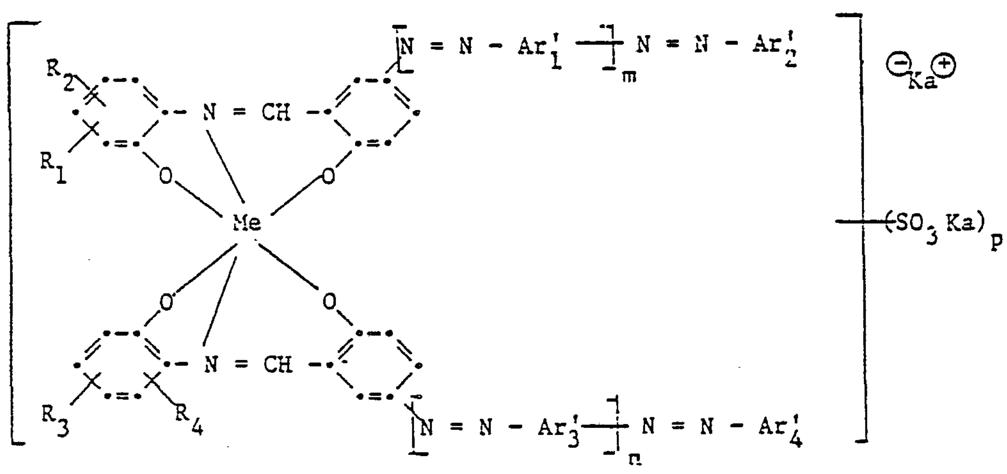

(II)

worin

Me Kobalt oder Chrom,

$R_1$, $R_2$, $R_3$ und $R_4$ unabhängig voneinander je Wasserstoff, Nitro, Chlor, Sulfo, $C_1$-$C_4$-Alkyl, $C_1$-$C_4$-Alkoxy, Sulfamid, N-mono- oder N,N-dialkyliertes Sulfamid, oder Alkylsulfonyl,

$Ar'_1$ und $Ar'_3$ unabhängig voneinander je einen gegebenenfalls durch Sulfo, $C_1$-$C_4$-Alkyl oder $C_1$-

$C_4$-Alkoxy substituierten Phenylenrest oder einen gegebenenfalls durch Sulfo substituierten Naphthylenrest,

Ar'$_2$ und Ar'$_4$ unabhängig voneinander je einen gegebenenfalls mit Chlor, Brom, Nitro, Sulfo, Sulfamid, N-mono- oder N,N-dialkyliertem Sulfamid, Alkylsulfonyl, Alkyl, Alkoxy oder Acylamino substituierten Phenyl- oder einen gegebenenfalls mit Sulfo substituierten Naphthylrest,

m und n jeweils 0 oder 1

p eine ganze Zahl von 4 bis 6 und

$Ka^{\oplus}$ ein Kation bedeutet.

3. Metallkomplexfarbstoffe gemäss einem der Ansprüche 1 oder 2, worin m und n jeweils 0 bedeuten.

4. Symmetrische Metallkomplexfarbstoffe der Formel III

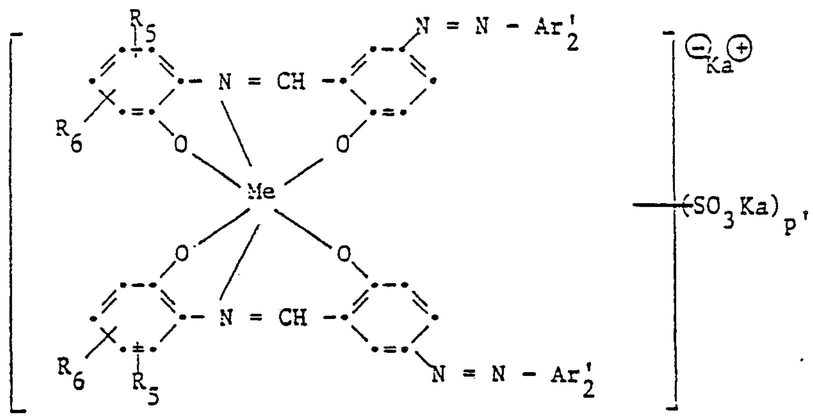

(III)

worin

Me Kobalt oder Chrom,

$R_5$ und $R_6$ je Wasserstoff, Chlor, Nitro oder Sulfo,

Ar'$_2$ einen gegebenenfalls mit Chlor, Sulfo, Nitro, Alkyl, Alkoxy oder Acylamino substituierten Phenylrest oder gegebenenfalls mit Sulfo substituierten Naphthylrest,

p' 4 oder 6 und $Ka^{\oplus}$ ein Kation bedeutet.

5. Symmetrische Metallkomplexfarbstoffe gemäss Anspruch 4, worin $R_5$ Nitro oder Sulfo bedeutet, welche in 4- oder 6-Stellung des 1-Hydroxy-2-aminobenzols angeordnet sind.

6. Metallkomplexfarbstoffe gemäss einem der Ansprüche 1-5, worin Me Kobalt bedeutet.

7. Verfahren zur Herstellung von Metallkomplexen der Formel I, dadurch gekennzeichnet, dass man einen Farbstoff der Formel IV

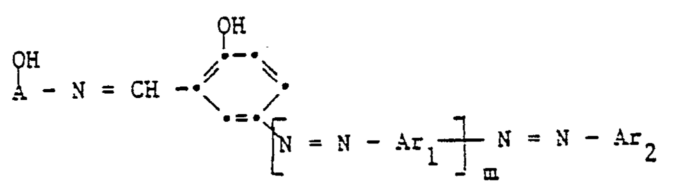

(IV)

und einen Farbstoff der Formel V

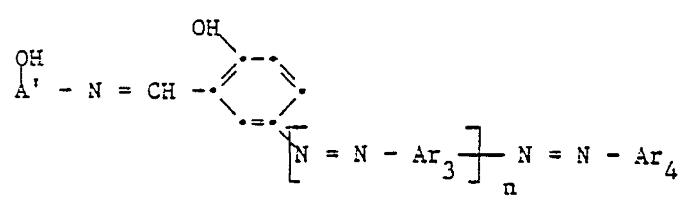

(V)

wobei die Farbstoffe IV und V identisch sein können, mit einem kobalt- oder chromabgebenden Mittel zum 1 : 2-Metallkomplex umsetzt.

8. Verfahren zum Färben von Stickstoff- und Hydroxygruppen enthaltenden Materialien, insbesondere von Wolle oder Polyamid und vor allem Leder, unter Verwendung der gemäss den Ansprüchen 1 bis 6 definierten bzw. gemäss Anspruch 7 erhaltenen Metallkomplexfarbstoffe.

**Claims**

1. A metal complex dye of the formula I

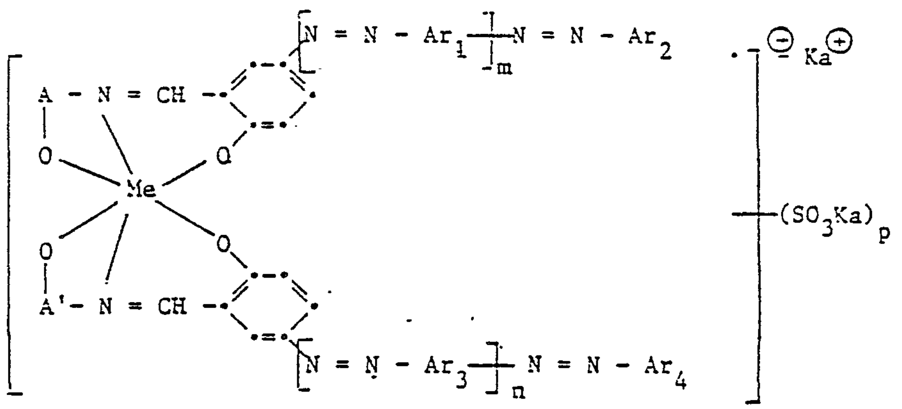

(I)

in which

Me is cobalt or chromium, each of

A and A′ independently of the other is the radical of an amine of the benzene series which carries the hydroxyl group in o-position relative to the azomethine group, each of

$Ar_1$ and $Ar_3$ independently of the other is a substituted or unsubstituted phenylene or naphthylene radical, each of

$Ar_2$ and $Ar_4$ independently of the other is a substituted or unsubstituted radical of the benzene or naphthalene series, each of

m and n independently of the other is 0 or 1,

p is an integer from 4 to 6 and

$Ka^{\oplus}$ is a cation.

2. A metal complex dye according to claim 1 of the formula

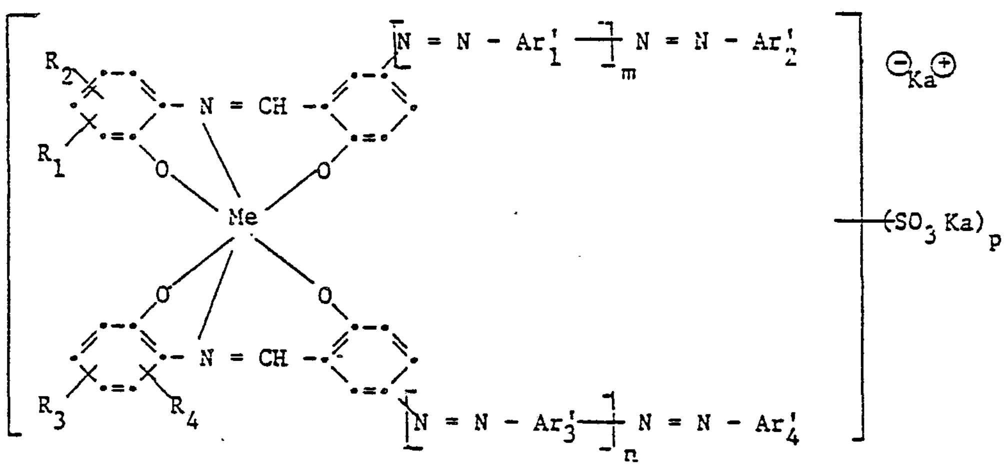

(II)

in which

Me is cobalt or chromium, each of

$R_1$, $R_2$, $R_3$ and $R_4$ independently of one another is hydrogen, nitro, chlorine, sulfo, $C_1$-$C_4$-alkyl, $C_1$-$C_4$-alkoxy, sulfamide, N-mono- or N,N-dialkylated sulfamide, or alkylsulfonyl, each of

$Ar'_1$ and $Ar'_3$ independently of the other is a phenylene radical which is unsubstituted or substituted by sulfo, $C_1$-$C_4$-alkyl or $C_1$-$C_4$-alkoxy, or a naphthylene radical which is unsubstituted or substituted by sulfo, each of

$Ar'_2$ and $Ar'_4$ independently of the other is a phenyl radical which is unsubstituted or substituted by chlorine, bromine, nitro, sulfo, sulfamide, N-mono- or N,N-dialkylated sulfamide, alkylsulfonyl, alkyl, alkoxy or acylamino, or a naphthyl radical which is unsubstituted or substituted by sulfo, each of

m and n is 0 or 1,

p is an integer from 4 to 6, and

$Ka^{\oplus}$ is a cation.

3. A metal complex dye according to either of claims 1 or 2, in which each of m and n is 0.

4. A symmetrical metal complex dye of the formula III

(Siehe Figur Seite 17 f.)

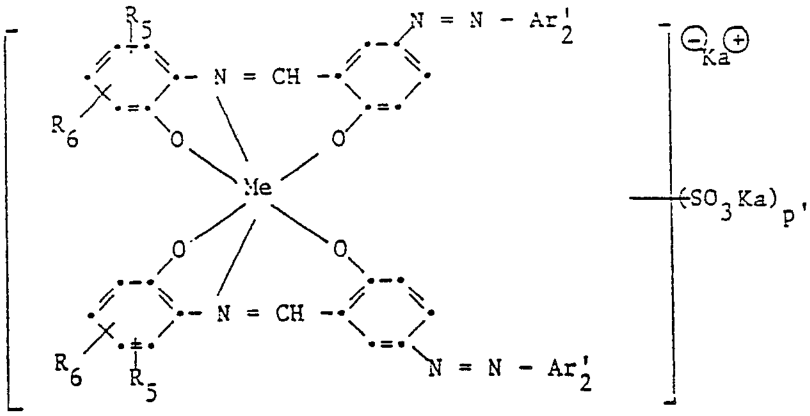

(III)

in which

Me is cobalt or chromium, each of

$R_5$ and $R_6$ is hydrogen, chlorine, nitro or sulfo,

$Ar'_2$ is a phenyl radical which is unsubstituted or substituted by chlorine, sulfo, nitro, alkyl, alkoxy or acylamino, or a naphthyl radical which is unsubstituted or substituted by sulfo,

p' is 4 or 6, and $Ka^{\oplus}$ is a cation.

5. A symmetrical metal complex dye according to claim 4, in which $R_5$ is nitro or sulfo which are located in the 4- or 6-position of 1-hydroxy-2-aminobenzene.

6. A metal complex dye according to any one of claims 1 to 5, in which Me is cobalt.

7. A process for the preparation of a metal complex of the formula I, which process comprises reacting a dye of the formula IV

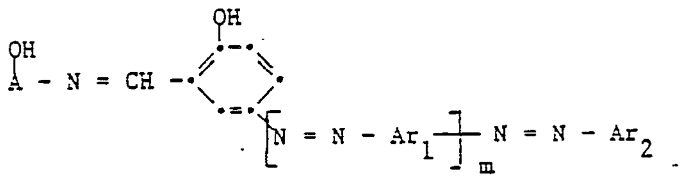

(IV)

and a dye of the formula V

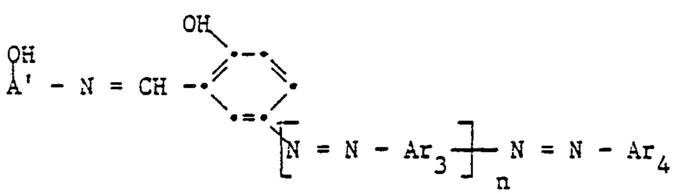

(V)

which dyes IV and V may be identical, with a cobalt- or chromium-donating agent to give the 1 : 2 metal complex.

8. A process for dyeing nitrogen- and hydroxyl-containing materials, in particular wool or polyamide and especially leather, which process comprises the use of a metal complex dye as defined in any one of claims 1 to 6 or obtained according to claim 7.

**Revendications**

1. Colorants à complexes métalliques de formule I

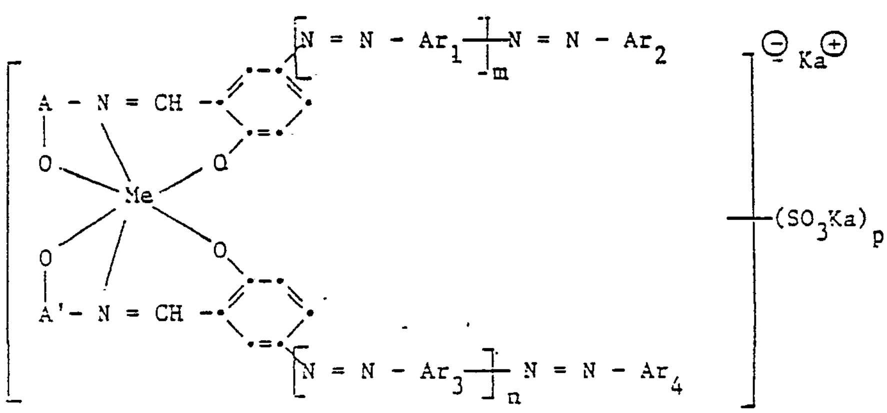

(I)

dans laquelle

Me représente un atome de cobalt ou de chrome,

A et A', indépendamment l'un de l'autre, représentent chacun le résidu d'une amine de la série du benzène, qui porte un groupe hydroxyle en position ortho par rapport au groupe azométhine,

$Ar_1$ et $Ar_3$, indépendamment l'un de l'autre, représentent chacun un résidu phénylène ou naphtylène éventuellement substitué,

$Ar_2$ et $Ar_4$, indépendamment l'un de l'autre, représentent chacun un résidu benzène ou naphtalène éventuellement substitué,

m et n, indépendamment l'un de l'autre, représentent chacun 0 ou 1,

p représente un nombre entier allant de 4 à 6, et

$Ka^{\oplus}$ représente un cation.

2. Colorants à complexes métalliques conformes à la revendication 1, de formule

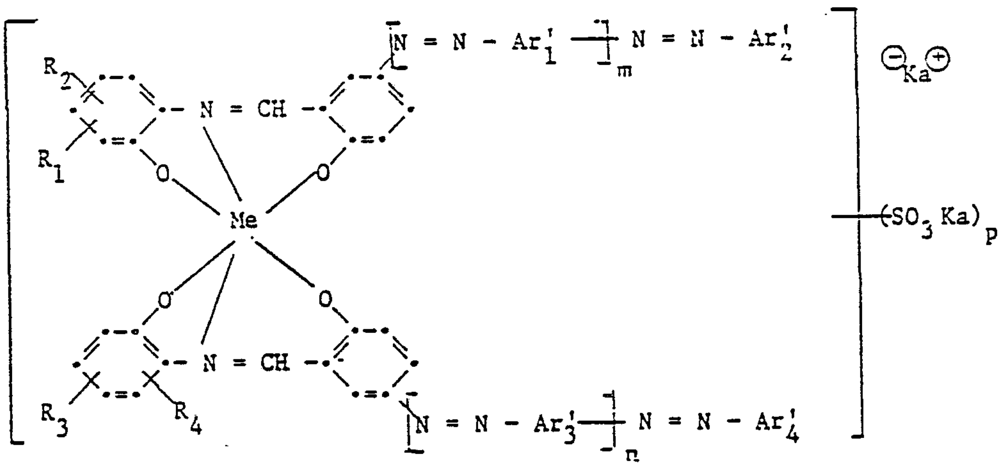

(II)

dans laquelle

Me représente un atome de cobalt ou de chrome,

$R_1$, $R_2$, $R_3$ et $R_4$, indépendamment l'un de l'autre, représentent chacun un atome d'hydrogène ou de chlore ou un groupe nitro, sulfo, alkyle en $C_{1-4}$, alcoxy en $C_{1-4}$, sulfamido, sulfamido N-monoalkylé ou N,N-dialkylé, ou alkylsulfonyle,

$Ar'_1$ et $Ar'_3$, indépendamment l'un de l'autre, représentent chacun un résidu phénylène éventuellement substitué par un groupe sulfo, alkyle en $C_{1-4}$ ou alcoxy en $C_{1-4}$, ou un résidu naphtylène éventuellement substitué par un groupe sulfo,

$Ar'_2$ et $Ar'_4$, indépendamment l'un de l'autre, représentent chacun un résidu phényle éventuellement substitué par un atome de chlore ou de brome ou par un groupe sulfo, nitro, sulfamido, sulfamido N-monoalkylé ou N,N-dialkylé, alkylsulfonyle, alkyle, alcoxy, ou acylamino, ou un résidu naphtyle éventuellement substitué par un groupe sulfo,

m et n représentent chacun 0 ou 1,

p représente un nombre entier allant de 4 à 6, et

$Ka^{\oplus}$ représente un cation.

3. Colorants à complexes métalliques conformes à l'une des revendications 1 ou 2, dans lesquelles m et n représentent chacun 0.

4. Colorants à complexes métalliques symétriques de formule III

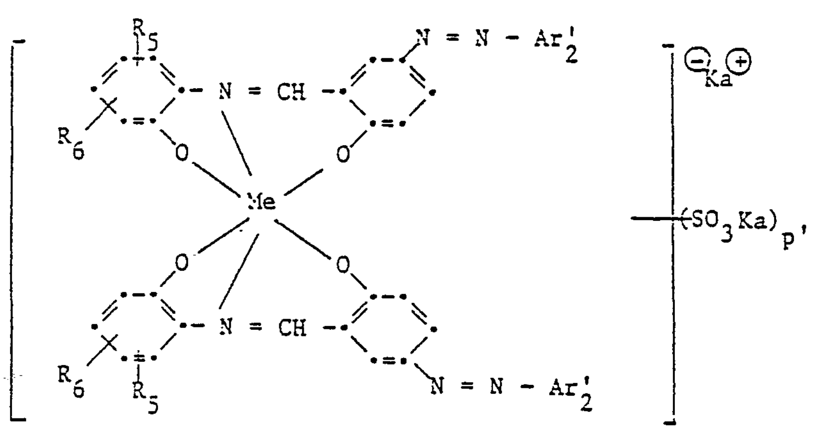

(III)

dans laquelle

Me représente un atome de cobalt ou de chrome,

$R_5$ et $R_6$ représentent chacun un atome d'hydrogène ou de chlore, ou un groupe nitro ou sulfo,

$Ar_2$ représente un résidu phényle éventuellement substitué par un atome de chlore, ou par un groupe sulfo, nitro, alkyle, alcoxy, ou acylamino, ou bien un résidu naphtyle éventuellement substitué par un groupe sulfo,

p' représente 4 ou 6, et $Ka^{\oplus}$ représente un cation.

5. Colorants à complexes métalliques symétriques conformes à la revendication 4, dans lesquels $R_5$ représente un groupe nitro ou sulfo, situé en position 4 ou 6 sur le 1-hydroxy-2-aminobenzène.

6. Colorants à complexes métalliques conformes à l'une des revendications 1-5, dans lesquels Me représente un atome de cobalt.

7. Procédé de préparation des complexes métalliques de formule I, caractérisé en ce que l'on fait réagir un colorant de formule IV

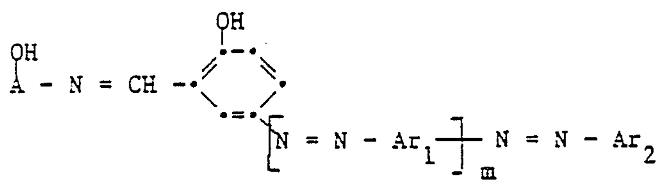

(IV)

et un colorant de formule V

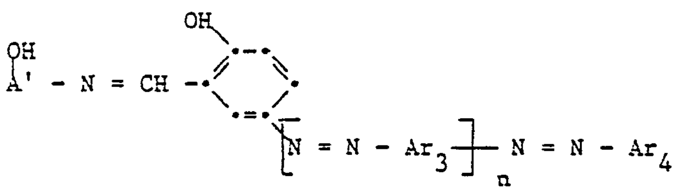

(V)

les colorants IV et V pouvant être identiques, avec un agent donneur de chrome ou de cobalt, pour obtenir un complexe métallique 1 : 2.

8. Procédé de teinture de matériaux contenant des groupes hydroxyles et des atomes d'azote, en particulier de la laine ou du polyamide et surtout du cuir, utilisant les colorants à complexes métalliques définis conformément aux revendications 1 à 6 ou obtenus conformément à la revendication 7.